# EUROPEAN PATENT SPECIFICATION

(11) **EP 2 916 042 B1**
(45) Date of publication and mention of the grant of the patent: **22.12.2021**
(21) Application number: 13852113.3
(22) Date of filing: 30.10.2013
(51) Int. Cl.: F16H 25/20, F16H 25/24

(54) **ELECTRIC LINEAR ACTUATOR**
ELEKTRISCHER LINEARANTRIEB
ACTIONNEUR LINÉAIRE ÉLECTRIQUE

(30) Priority: 30.10.2012 JP 2012239631
(43) Date of publication of application: 09.09.2015
(73) Proprietor: NTN Corporation, Osaka-shi, Osaka 550-0003 (JP)
(72) Inventor: FUNADA, Kensuke, Iwata-shi Shizuoka 438-8510 (JP); IKEDA, Yoshinori, Iwata-shi Shizuoka 438-8510 (JP); KAZUNO, Keisuke, Iwata-shi Shizuoka 438-8510 (JP)
(74) Representative: Cohausz & Florack
(86) International application number: PCT/JP2013/079376
(87) International publication number: WO 2014/069516

(56) References cited:
- WO-A1-2011/135849
- JP-A- 2010 270 887
- JP-A- 2011 117 513
- JP-A- 2012 082 921
- JP-U- H0 343 156
- None

## Description

### Field of the Invention

The present invention relates to an electric linear actuator provided with a ball screw mechanism used in motors in general industries and driving sections of automobiles etc., and more particularly to an electric linear actuator used in a transmission or a parking brake of automobiles for converting rotary motion from an electric motor to linear motion of a driving shaft via a ball screw mechanism.

### Description of Background Art

It has been generally used gear mechanisms such as a trapezoidal thread worm gear mechanism or a rack and pinion gear mechanism as a mechanism for converting a rotary motion of an electric motor to an axial linear motion in an electric linear actuator used in various kinds of driving sections. These motion converting mechanisms involve sliding contact portions and thus power loss is increased and accordingly size of electric motor and power consumption are increased. Thus, the ball screw mechanisms have been widely adopted as more efficient actuators.

In an electric linear actuator of the prior art, an output member connected to a nut can be axially displaced by rotationally driving a ball screw shaft forming a ball screw with use of an electric motor supported on a housing. In usual, since friction of the ball screw mechanism is very low, the ball screw shaft tends to be reversely rotated easily when a pushing thrust load is applied to the output member, and accordingly it is necessary to hold the position of the output member when the electric motor is stopped.

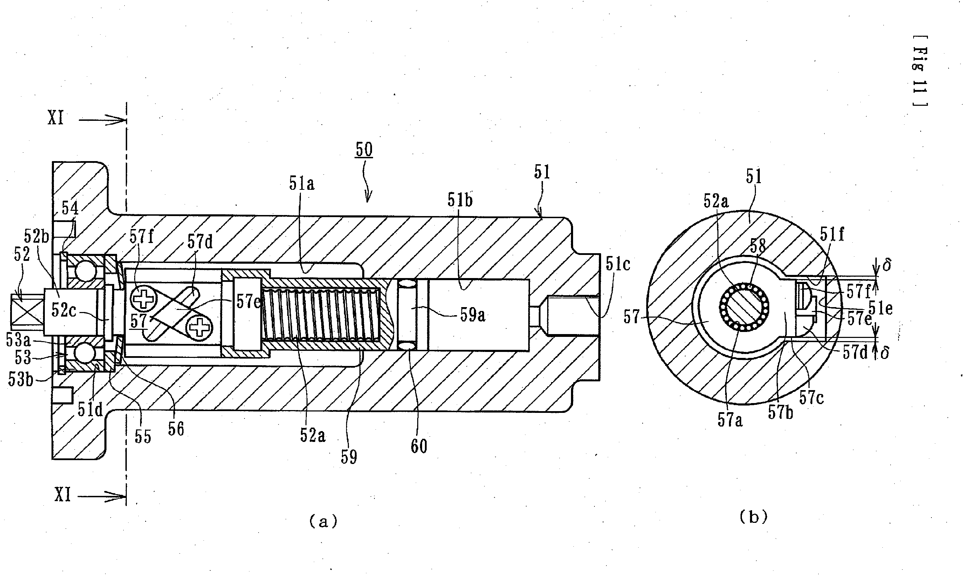

Accordingly, it has been developed an electric linear actuator in which a brake means for an electric motor is arranged or a low efficient means such as a worm gear is provided as a power transmitting means. One representative example of the electric linear actuator is shown in Fig. 11 and this electric linear actuator 50 has a cylindrical housing 51 comprising a cavity 51a for containing a ball screw mechanism, a cylinder portion 51b arranged coaxially with the cavity 51a, a fluid inlet (not shown) and fluid outlet 51c communicating with the cylinder portion 51b.

A screw shaft 52 extends in the cavity 51a of the housing 51 and one end of which is adapted to be connected to an electric motor (not shown) arranged at the outside of the housing 51. There are formed on the outer circumference of the screw shaft 52 a male-screw groove 52a, a round shaft portion 52b and flange portion 52c therebetween. An inner ring 53a of a bearing 53 is fitted on the round shaft portion 52b and the inner end face (the right end face in Fig. 11) of the inner ring 53a is abutted against the flange portion 52c. On the other hand, an outer end face (the left end face) of an outer ring 53b of the bearing 53 is abutted against a stopper ring 54 fitted in the cavity 51a. Accordingly, the screw shaft 52 is supported by the bearing 53 rotationally but axially immovably. In addition, a washer 55 and a leaf spring (shock absorbing member) 56 are disposed between the inner end face of the outer ring 53b of the bearing 53 and a stepped portion 51d of the housing 51.

On the other hand, a cylindrical nut 57 only axially movable relative to the housing 51 is disposed around the screw shaft 52 and formed with a female-screw groove 57a on its inner circumference. A plurality of balls 58 are rollably disposed within a helical rolling passage formed between the male and female screw grooves 52a, 57a. The ball screw mechanism is thus formed by the screw shaft 52, the nut 57 and the balls 58.

A radially projected portion 57b having a rectangular cross-section is integrally formed with the outer circumference of the nut 57. The radially projected portion 57b can be engaged with a axially extending guide groove 51e formed on the inner circumference of the cavity 51a of the housing 51. A predetermined gap "δ" is formed in each space between the side surfaces (engaging surfaces) 57c, 57c and the side surfaces (guide surfaces) 51f, 51f of the guide groove 51e.

A tube 57d forming a ball-circulating member is mounted on a flat outermost surface of the radially projected portion 57b. The tube 57d is secured on the nut 57 by screws 57f via a bracket 57e and has a function for returning the balls 58 from one end to the other end of the helical rolling passage formed between the screw grooves 52a, 57a.

A hollow cylindrical piston member 59 having one closed end is mounted on the right end of the nut 57. The screw shaft 52 can enter into and come out from a space within the piston member 59. The outer circumference of the piston member 59 is closely and slidably fitted into the inner circumference of the cylinder portion 51b of the housing 51. An O-ring 60 is disposed in a circumferential groove 59a formed near the right end of the piston member 59 to prevent fluid filled within the cylinder portion 51b from being leaked toward the cavity 51a through a gap between the piston member 59 and the cylinder portion 51b (see e.g. Patent Document No. 1 below).

### Document of the Prior Art

### Patent Document

Patent Document 1: JP 2006 -233997 A Document WO2011068125 discloses an electrically driven actuator comprising a ball screw mechanism that is connected to a speed-reduction mechanism. A drive shaft is slidably supported by a bush mounted on the first housing and a parallel key mounted on the outer periphery is mounted on the first housing. By being engaged with the formed key groove, it is relatively movable in the axial direction and is not rotatable relative to each other Document WO2011135849 discloses an electrically driven actuator comprising a ball screw mechanism. The ball screw mechanism is inserted into the ball screw mechanism receiving portion of the main housing from the coupling shaft side, and the guide projections of the detent member, which is fixed to the ball screw shaft, are engaged into the guide groove of the guide member mounted on the main housing. Disclosure of the Invention

### Problems to be solved by the Invention

In the electric linear actuator 50 of the prior art, the anti-rotation of the nut 57 is performed by engagement of the guide groove 51e formed on the housing 51 with the radially projected portion 57b integrally formed on the nut 57. However, the integral structure of the radially projected portion 57b with the nut 57 increases manufacturing cost of the electric linear actuator 50. In addition, the housing 51 is formed of aluminum alloy to reduce the weight of the electric actuator 50. However, the housing 51 formed of aluminum alloy would be short in wear resistance and strength for the engagement of the guide groove 51e of the housing 51 with the radially projected portion 57a and also be afraid that the housing 51 would be deformed or destroyed by impact force of the ball screw applied against the inner wall of the housing 51 if the electric linear actuator 50 could not be correctly controlled due to e.g. system error etc..

It is, therefore, an object of the present invention to provide an electric linear actuator which can reduce damage and wear of the housing and perform the anti-rotation of the nut with a simple structure to improve the reliability and manufacturing cost of the electric linear actuator.

### Means for solving the Problems

For achieving the object of the present invention, there is provided an electric linear actuator according to claim 1.

It is preferable as defined in claim 2 that a distance between the nut and the sleeve is smaller than the radius of the guide pin. This makes it possible to prevent falling-out of the guide pin(s) from the recessed groove.

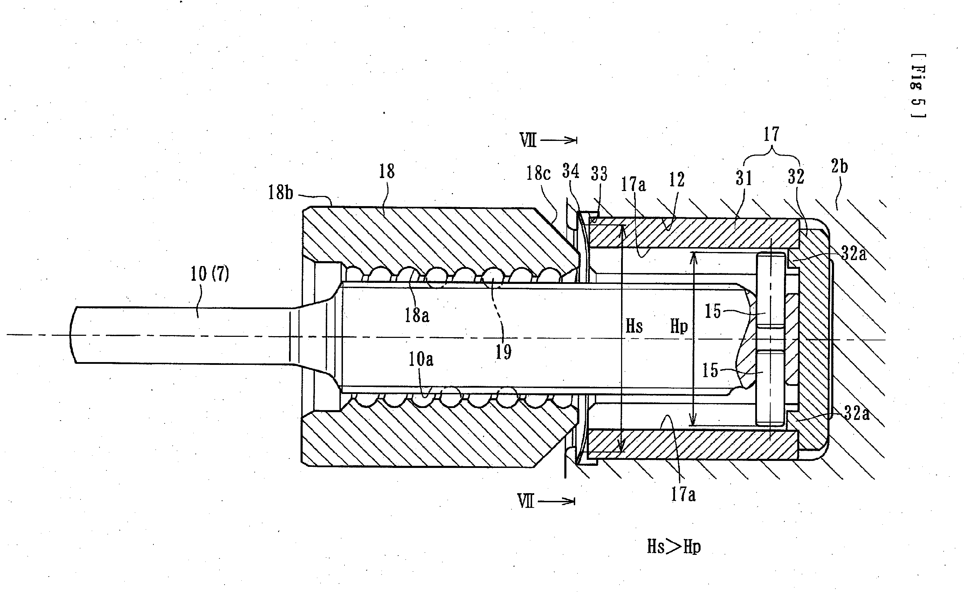

It is also preferable as defined in claim 3 that the housing is formed with an annular groove in which stopper ring is mounted for preventing falling-out of the sleeve from the housing, and that the inner diameter of the stopper ring is larger than the whole height of the guide pin. This makes it possible for the guide pin(s) to abut against the end face of the nut without interfering with the stopper ring when the screw shaft is moved toward the left (Fig. 5) and thus to surely prevent falling-out of the stopper ring and to accurately control the moving range of the screw shaft. In addition, also in this case, since the contact surface between the stopper ring and the sleeve is circular, it is possible to maintain uniform urging force applied to the sleeve by the stopper ring and thus to stably hold the sleeve without any axial play.

It is preferable as defined in claim 4 that the outer diameter of the chamfered portion at its end is smaller than the inner diameter of the stopper ring. This makes it possible to surely prevent falling-out of the guide pin(s) with avoiding interference of the nut with the stopper ring.

Finally, it is preferable as defined in claim 5 that corners of the stopper ring are rounded to remove sharp edges. This makes it possible to prevent generation of abrasion debris.

### Effects of the Invention

According to the electric linear actuator of the present invention, is possible to provide the electric linear actuator which can bring the nut and the sleeve close each other with avoiding interference of them and thus surely prevent falling-out of the guide pin(s) from the recessed groove to reduce damage and wear of the housing and also can improve the reliability of the electric linear actuator with preventing rotation of the screw shaft by simple structure and satisfying both reduction of weight and increase of the durability and strength of the electric linear actuator.

### Brief description of the Drawings

[Fig. 1] A longitudinal section view showing a preferable embodiment of an electric linear actuator of the present invention;
[Fig. 2] A longitudinal section view showing an actuator main body of Fig. 1;
[Fig. 3] A partially enlarged cross-sectional view showing an intermediate gear portion of Fig. 1;
[Fig. 4] A partially enlarged cross-sectional view showing a modification of the intermediate gear portion of Fig. 3;
[Fig. 5] An enlarged cross-sectional view of Fig. 1;
[Fig. 6] An explanatory view showing a moving range of the screw shaft;
[Fig. 7] A cross-sectional view taken along a line VII-VII of Fig. 5;
[Fig. 8] A partially enlarged view of Fig. 6;
[Fig. 9(a)] A front elevation view showing the sleeve of Fig. 1;
[Fig. 9(b)] A cross-sectional view taken along a line IX-IX of Fig. 9(a);
[Fig. 9(c) ] A rear elevation view of the sleeve of Fig. 9(b);
[Fig. 10(a)] A front elevation view showing a bottom plate of the sleeve of Fig. 9;
[Fig. 10(b)] A cross-sectional view taken along a line X-X of Fig. 10(a);
[Fig. 10(c) ] A rear elevation view of the bottom plate of the sleeve of Fig. 9; and
[Fig. 11] A longitudinal section view showing the electric linear actuator of the prior art.

### Mode for carrying out the Invention

One mode for carrying out the present invention is an electric linear actuator comprising a housing formed of aluminum alloy; an electric motor mounted on the housing; a speed reduction mechanism for reducing rotational speed of the electric motor via a motor shaft; a ball screw mechanism for converting rotational motion of the electric motor transmitted via the speed reduction mechanism to axial linear motion of a driving shaft; the ball screw mechanism comprising a nut formed with a helical screw groove on its inner circumference and supported by bearings mounted on the housing rotationally but axially immovably, and a screw shaft coaxially integrated with the driving shaft, formed with helical screw groove on its outer circumference corresponding to the helical screw groove of the nut, inserted into the nut via a large number of balls, and supported on the housing axially movably but not rotationally; and a blind bore formed on the housing for containing an end of the screw shaft characterized in that a sleeve formed of sintered alloy is fitted into the blind bore formed in the housing until the sleeve is closely contacted with a bottom of the blind bore; that a pair of axially extending recessed grooves are formed on the inner circumference of the sleeve at diametrically opposed positions; that guide pin(s) mounted on the end of the screw shaft is engaged with the recessed groove; and that a tapering chamfered portion is formed on the end of the nut and the outer diameter of the chamfered portion at the end of the nut is smaller than a distance between the recessed grooves.

### Embodiment

A preferred embodiment and modifications of the present invention will be hereinafter described with reference to the drawings.

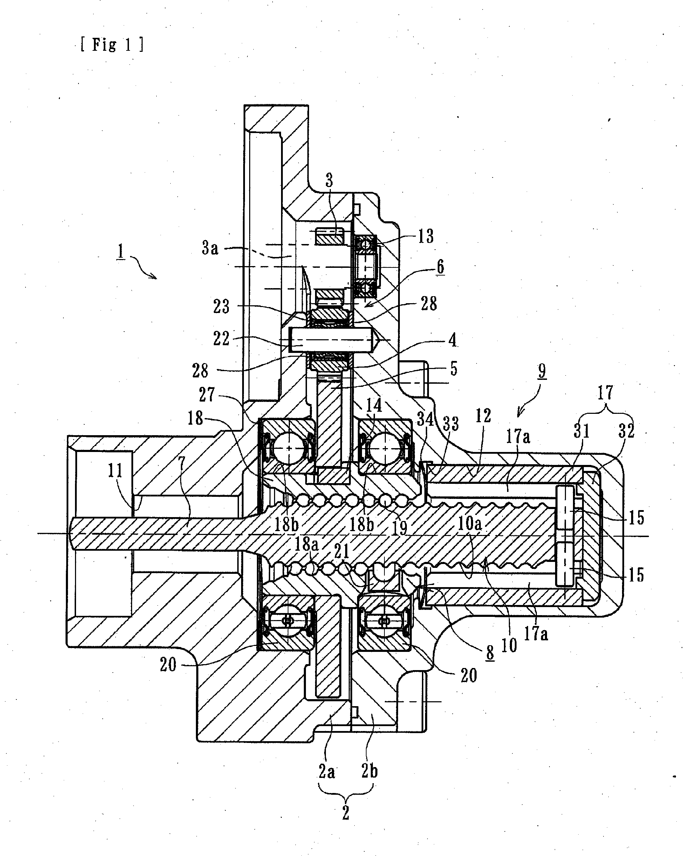

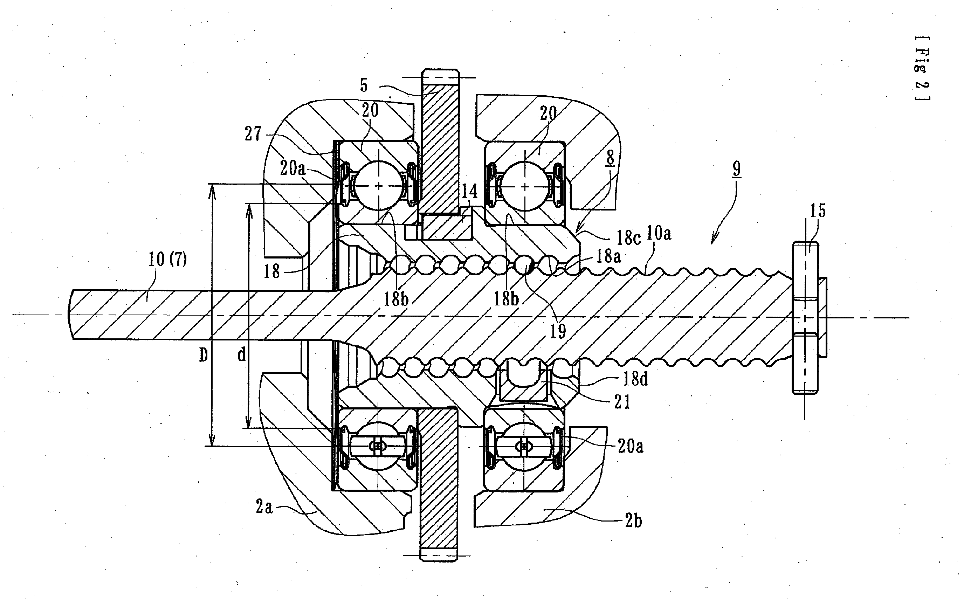

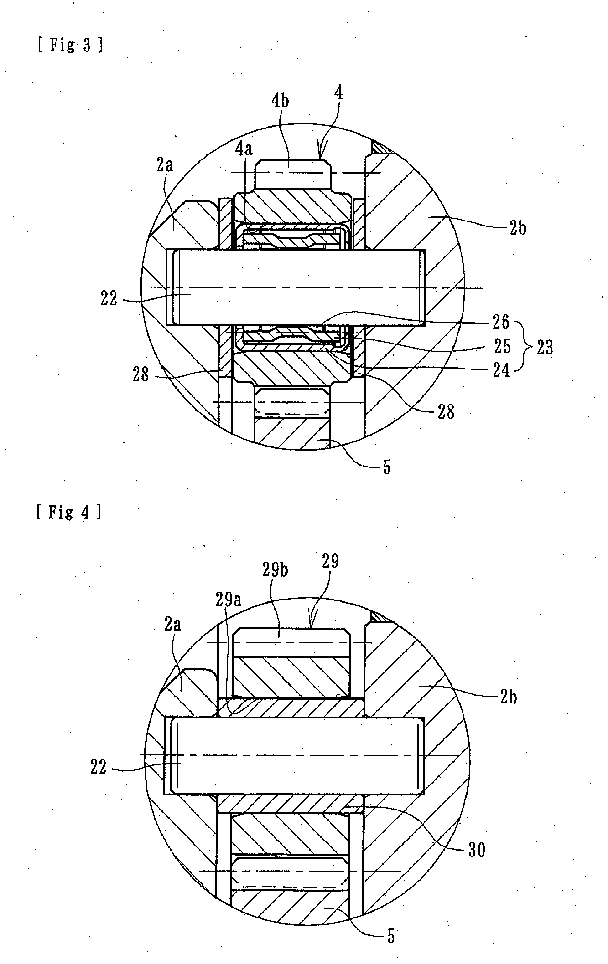

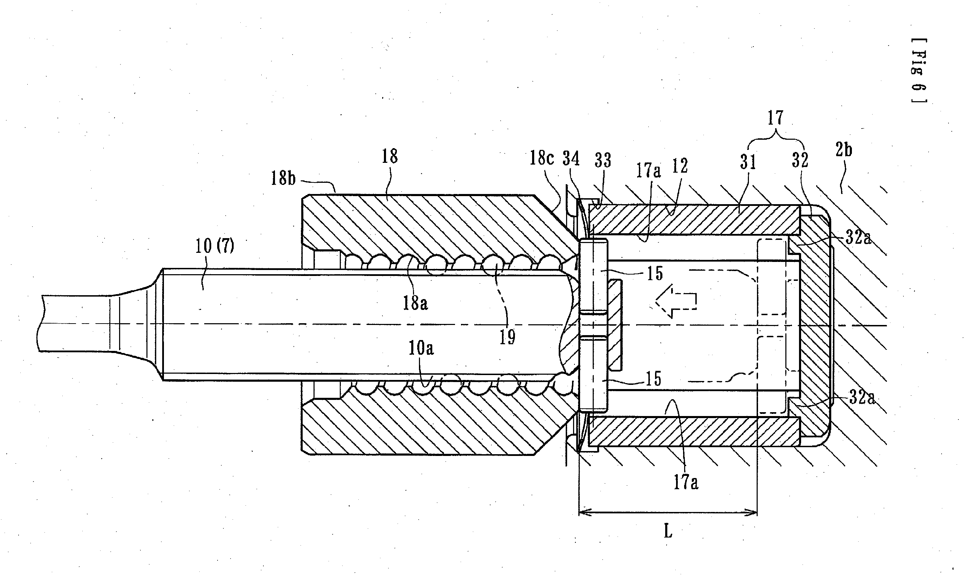

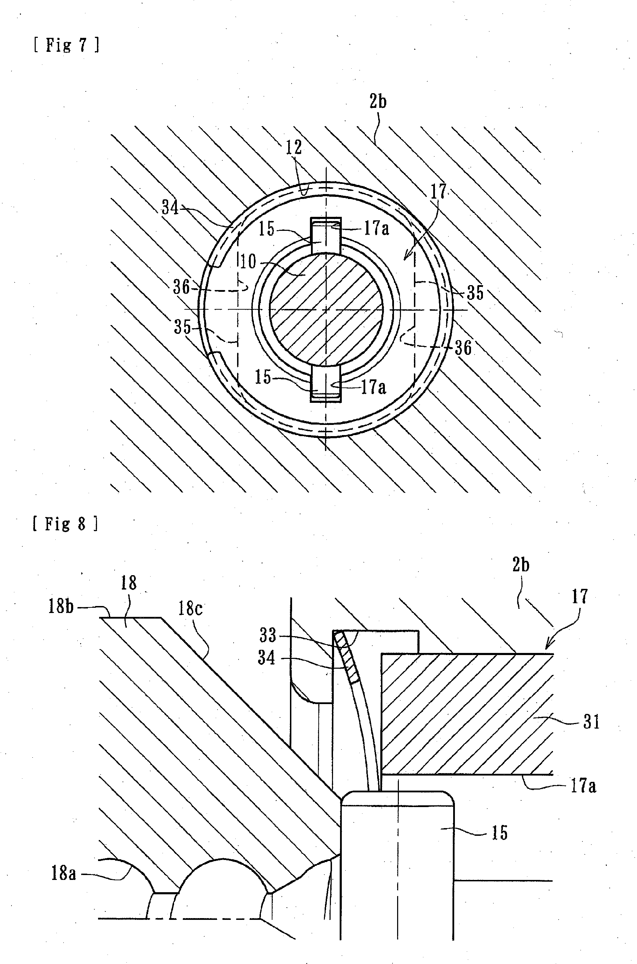

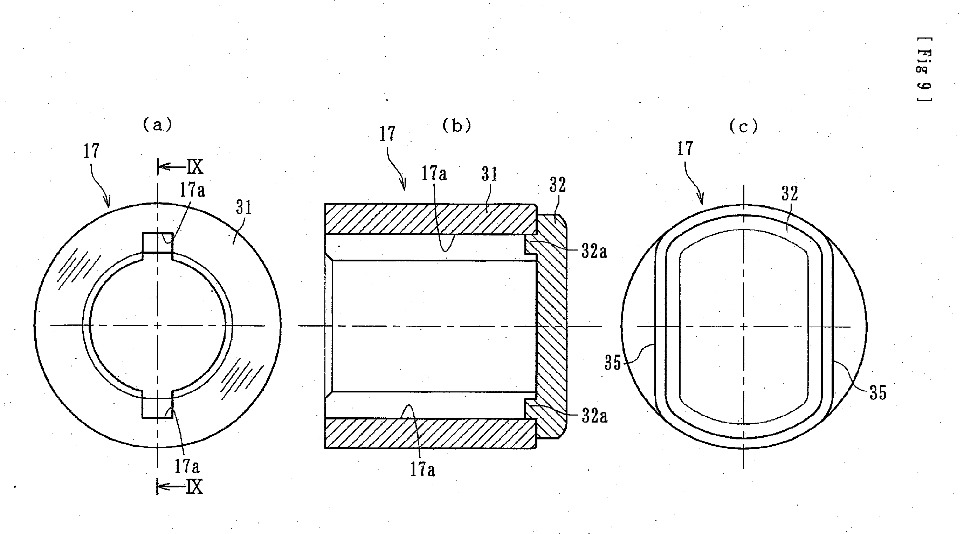

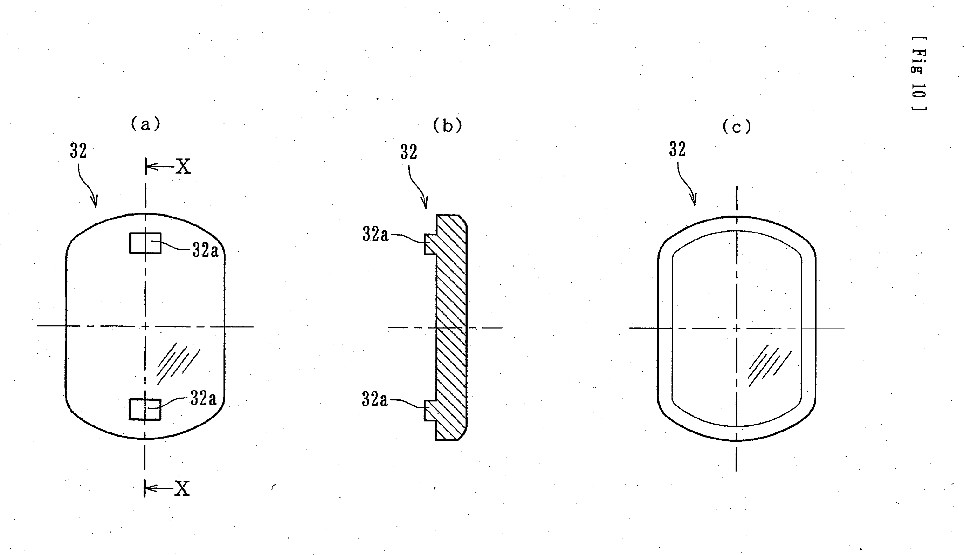

Fig. 1 is a longitudinal section view showing a preferable embodiment of an electric linear actuator of the present invention, Fig. 2 is a longitudinal section view showing an actuator main body of Fig. 1, Fig. 3 is a partially enlarged cross-sectional view showing an intermediate gear portion of Fig. 1, Fig. 4 is a partially enlarged cross-sectional view showing a modification of the intermediate gear portion of Fig. 3, Fig. 5 is an enlarged cross-sectional view of Fig. 1, Fig. 6 is an explanatory view showing a moving range of the screw shaft, Fig. 7 is a cross-sectional view taken along a line VII-VII of Fig. 5, Fig. 8 is a partially enlarged view of Fig. 6, Fig. 9(a) is a front elevation view showing the sleeve of Fig. 1, Fig. 9(b) is a cross-sectional view taken along a line IX-IX of Fig. 9(a), Fig. 9(c) is a rear elevation view of the sleeve of Fig. 9(b), Fig. 10(a) is a front elevation view showing a bottom plate of the sleeve of Fig. 9, Fig. 10(b) is a cross-sectional view taken along a line X-X of Fig. 10(a), and Fig. 10(c) is a rear elevation view of the bottom plate of the sleeve of Fig. 9.

As shown in Fig. 1, an electric linear actuator 1 comprises a cylindrical housing 2, an electric motor (not shown) mounted on the housing 2, an intermediate gear 4 mating with an input gear 3 mounted on the motor shaft 3a of the motor, a speed reduction mechanism 6 including the input gear 3 and the intermediate gear 4 and an output gear 5 mating with the intermediate gear 4, a ball screw mechanism 8 for converting rotational motion of the electric motor transmitted via the speed reduction mechanism 6 to axial linear motion of a driving shaft 7, and an actuator main body 9 including the ball screw mechanism 8.

The housing 2 is formed of aluminum alloy such as A 6063 TE, ADC 12 etc. by aluminum die casting and comprises a first housing 2a and a second housing 2b abutted with and integrally fastened each other by fastening bolts (not shown). The electric motor is mounted on the first housing 2a and blind bores 11, 12 for containing a screw shaft 10 are formed in the first and second housings 2a, 2b respectively.

The input gear 3 is press-fitted onto the motor shaft 3a of the electric motor immovably each other and rotationally supported by a deep groove rolling bearing 13 mounted on the second housing 2b. The output gear 5 mating with the intermediate spur gear 4 is integrally secured via a key 14 on a nut 18 forming the ball screw mechanism 8 described later more in detail.

The driving shaft 7 is formed integrally with the screw shaft 10 forming the ball screw mechanism 8 and guide pin(s) 15,15 are mounted on one end (the right end in Fig. 1) of the driving shaft 7. In addition, a sleeve 17 described later more in detail is fitted in the blind bore 12 of the second housing 2b and axially extending recessed grooves 17a, 17a are formed on the inner circumference of the sleeve 17 by grinding. The recessed groves 17a, 17a are arranged at diametrically opposite positions and the pin(s) 15,15 of the screw shaft 10 are engaged with the recessed groove 17a so that the screw shaft 10 is supported axially movably but not rotationally. The sleeve 17 comprises a cylindrical sleeve main body 31 and a bottom plate 32 to be fitted onto one end of the sleeve main body 31.

As shown in the enlarged view of Fig. 2, the ball screw mechanism 8 comprises the screw shaft 10 and the nut 18 mated with the screw shaft 10 via balls 19. The screw shaft 10 is formed on its outer circumference with a helical screw groove 10a. On the other hand, the nut 18 is formed on its inner circumference with screw groove 18a corresponding to the screw groove 10a of the screw shaft 10 and a plurality of balls 19 are rollably contained between the screw grooves 10a, 18a. The nut 18 is supported by two supporting bearings 20, 20 rotationally but axially immovably relative to the housings 2a, 2b. A numeral 21 denotes a bridge member for achieving an endless circulating passage of balls 19 through the screw groove 18a of the nut 18.

The cross-sectional configuration of each screw groove 10a, 18a may be either one of circular-arc or Gothic-arc configuration. However, this embodiment adopts the Gothic-arc configuration since it can have a large contacting angle with the ball 19 and a small axial gap. This enables to have large rigidity against the axial load and thus to suppress generation of vibration.

The nut 18 is formed of case hardened steel such as SCM 415 or SCM 420 and its surface is hardened to HRC 55~62 by vacuum carburizing hardening. This enables to omit treatments such as buffing for scale removal after heat treatment and thus to reduce the manufacturing cost. On the other hand, the screw shaft 10 is formed of medium carbon steel such as S 55C or case hardened steel such as SCM 415 or SCM 420 and its surface is hardened to HRC 55~62 by induction hardening or carburizing hardening.

The output gear 5 forming part of the speed reduction mechanism 6 is firmly secured on the outer circumference 18b of the nut 18 via a key 14 and the support bearings 20, 20 are press-fitted onto the nut via a predetermined interface at both sides of the output gear 5. This enables to prevent both the supporting bearings 20, 20 and output gear 5 from being axially shifted although strong thrust load would be applied to them from the driving shaft 7. Each supporting bearing 20 comprises a deep groove ball bearing on both sides of which is mounted shield plates 20a, 20a for preventing lubricating grease sealed within the bearing body from being leaked outside and abrasive debris from being entered into the bearing body from outside.

In the illustrated embodiment, since both the supporting bearings 20, 20 are formed by deep groove ball bearing having same specifications, it is possible to support both a thrust load applied from the driving shaft 7 and a radial load applied from the output gear 5 and also to simplify confirmation work to prevent errors in assembly of the bearing and thus to improve the assembling operability. In this case, the term "same specifications" means that the deep groove ball bearings have same inner diameters, outer diameters, width dimensions, rolling element sizes, rolling element numbers and internal clearances.

In the illustrated embodiment, one of the paired supporting bearings 20, 20 is mounted on the first housing 2a via a ring shaped elastic washer 27. The washer 27 is a wave-washer press-formed of austenitic stainless steel sheet (e.g. SUS 304 family of JIS) or preservative cold rolled steel sheet (e.g. SPCC family of JIS). An inner diameter "D" of the wave washer 27 is formed larger than an outer diameter "d" of the inner ring of the supporting bearing 20. This makes it possible to eliminate axial play of the paired bearings 20, 20 and thus to obtain smooth rotation of them. In addition, since the washer 27 contacts only the outer ring of the bearing 20 and does not contact its rotational inner ring, it is possible to prevent the inner ring of the bearing 20 from being abutted against the housing 2a and thus locked by the housing 2a although the nut 18 would be urged by a reverse thrust load toward the housing 2a.

Then the intermediate gear 4 forming the speed reduction mechanism 6 will be described. As shown in Fig. 3, the intermediate gear 4 is rotationally supported by a gear shaft 22 mounted on the first and second housings 2a, 2b via a rolling bearing 23. When one end of the gear shaft 22 is press-fitted into an aperture of the first housing 2a, if it is designed that the other end of the gear shaft 22 is mounted in an aperture of the second housing 2b by the clearance fit, assembling misalignment will be allowed and thus smooth rotational performance of the rolling bearing 23 and thus the intermediate gear 4 will be obtained. In the illustrated embodiment, the rolling bearing 23 is a so-called "shell type" needle roller bearing comprising an outer ring 24 press-formed of steel sheet press-fitted into an inner circumference 4a of the intermediate gear 4 and a plurality of needle rollers 26 contained in the outer ring 24 via a cage 25. This needle bearing is easily available and thus reduces the manufacturing cost.

Ring shaped washers 28, 28 are installed on both sides of the intermediate gear 4 to prevent direct contact of the intermediate gear 4 against the first and second housings 2a, 2b. In this case, a face width of teeth 4b of the intermediate gear 4 is formed smaller than an axial width of gear (blank). This enables to reduce the contact area between the intermediate gear 4 and the washers 28 and thus their frictional resistance and to obtain smooth rotational performance. The washers 28 are flat washers press-formed of austenitic stainless steel sheet having high strength and frictional resistance or preservative cold rolled steel sheet. Alternatively, the washers 28 may be formed of brass, sintered metal or thermoplastic synthetic resin such as PA (polyamide) 66 etc. in which a predetermined amount of fiber reinforcing material such as GF (glass fiber) etc. is impregnated.

In addition, the width of the rolling bearing 23 is set smaller than the width of the intermediate gear 4. This makes it possible to prevent wear or deformation of sides of the bearing and thus to obtain smooth rotation.

Fig. 4 shows a modification of the structure of Fig. 3. The intermediate gear 29 is rotationally supported on the gear shaft 22 mounted on the first and second housings 2a, 2b via a sliding bearing 30. In this embodiment, the face width of the teeth 29b is formed same as the axial width of gear 29. The sliding bearing 30 is structured as an oil impregnated bearing (e.g. "BEARFIGHT" (registered trade mark of NTN corporation)) comprising porous metal including graphite micro-powder having a larger width than that of the intermediate gear 29 and press-fitted into the inner circumference 29a of the intermediate gear 29. This makes it possible to prevent the intermediate gear 29 from being contacted with the first and second housings 2a, 2b and worn without mounting any washer, to achieve smooth rotational performance with suppressing frictional resistance during rotation of the intermediate gear 29, and to reduce the manufacturing cost with suppressing increase of the number of components. The sliding bearing 30 may be formed of thermoplastic polyimide resin enabling injection molding.

According to the present embodiment, the blind bore 12 of the second housing 2b is formed near its opening with an annular groove 33 in which stopper ring 34 is mounted for preventing axial falling-out of the sleeve 17 from the housing. The stopper ring 34 is press-formed of cold rolled steel sheet and mounted so that it urges the end face of the sleeve 17. Corners of the stopper ring 34 are rounded to remove sharp edges and to prevent generation of abrasion debris during mount of the stopper ring 34 into the annular groove 33. This also surely enables to prevent generation of axial play. The inner diameter "Hs" of the stopper ring 34 is larger than the whole height "Hp" of the guide pin(s) 15. This makes it possible for the guide pin(s) 15 to abut against the end face of the nut 18 without interfering with the stopper ring 34 when the screw shaft 10(7) is moved toward the left (Fig. 5) and thus to surely prevent falling-out of the stopper ring 34 and to accurately control the moving range "L" (Fig. 6) of the screw shaft 10. In addition, also in this case, since the contact surface between the stopper ring and the sleeve is circular as shown in Fig. 7, it is possible to maintain uniform urging force applied to the sleeve 17 by the stopper ring 34 and thus to stably hold the sleeve 17 without any axial play.

In order to prevent the guide pin(s) 15 from being fallen out from the recessed grooves 17a, 17a, a distance between the nut 18 and sleeve 17 is set so that an outer diameter of a tapering chamfered portion 18c formed on the end of the nut 18 is smaller than a distance between the recessed grooves 17a, 17a. Especially, it is possible to surely prevent the falling-out of the guide pin(s) 15 from the recessed grooves 17a, 17a by setting the distance between the nut 18 and the sleeve 17 smaller than the radius of the guide pin 15. This makes it possible to arrange the nut 18 close to the sleeve 17 without interfering with the stopper ring 34 and the sleeve 17 and thus to reduce the size of the electric linear actuator.

The sleeve 17 is formed of sintered alloy by an injection molding machine for molding plastically prepared metallic powder. In this injection molding, metallic powder and binder comprising plastics and wax are firstly mixed and kneaded by a mixing and kneading machine to form pellets from the mixed and kneaded material. The pellets are fed to a hopper of the injection molding machine and then pushed into dies under a heated and melted condition and finally formed to the sleeve by a so-called MIM (Metal Injection Molding) method. The MIM method can easily mold sintered alloy material to article having desirable accurate configurations and dimensions although the article require high manufacturing technology and have configurations hard to form.

One example of the metallic powder is shown such as SCM 415 which can be carburization quenched later and has compositions of C: 0.13% by weight, Ni: 0.21% by weight, Cr: 1.1% by weight, Cu: 0.04% by weight, Mn: 0.76% by weight, Mo: 0.19% by weight, Si: 0.20% by weight, and remainder: Fe. The sleeve 17 is formed by controlling temperature of carburization quenching and tempering. There can be used other materials for the sleeve 17 e.g. FEN 8 of Japanese Powder Metallurgy Industry Standard which is excellent in formability and rust resistance and includes Ni: 3.0~10.0% by weight or precipitation hardening stainless steel SUS 630 including C: 0.07% by weight, Cr: 17% by weight, Ni: 4% by weight, Cu: 4% by weight, and remainder: Fe. The surface hardness of SUS 630 can be increased within a range of HRC 20~33 by solution treatment to obtain both high toughness and hardness.

As shown in Fig. 9, the sleeve 17 adapted to be fitted into the blind bore 12 of the second housing 2b has a cup-shaped configuration and comprises a cylindrical sleeve main body 31 and a bottom plate 32 fitted into one end of the sleeve main body 31. The sleeve 17 is fitted into the housing 2b until the bottom plate 32 closely contacts the bottom of the blind bore 12. The axially extending recessed grooves 17a, 17a are formed by grinding on the inner circumference of the sleeve main body 31 at diametrically opposite positions. Flat surfaces 35, 35 are formed on the outer circumference of the sleeve main body 31 and arranged at positions circumferentially 90°apart from the recessed grooves 17a, 17a to assure the strength and rigidity of the sleeve 17. The two-piece structure enables to simplify the sleeve structure and improve its mass-productivity.

As shown in Fig. 10, the bottom plate 32 of the sleeve 17 has an outline corresponding to the configuration of the sleeve main body 31 and a pair of projections 32a, 32a are integrally formed on a side to be mounted to the end face of the sleeve main body 31. The bottom plate 32 can be mounted on the sleeve main body 31 with fitting the projections 32a, 32a in the recessed grooves 17a, 17a.

On the other hand, the guide pin(s) 15 is formed of high carbon chrome bearing steel such as SUJ 2 or blister bearing steel such as SCr 435 and its surface is formed of a carbonitriding layer including carbon of 0.80% by weight or more and having hardness of HRC 58 or more. In this case it is possible to adopt needle rollers used in needle bearings as the guide pins. This makes it possible to have the guide pin having surface hardness of HRC 58 or more and being excellent in anti-wear property, availability and manufacturing cost.

As shown in Fig. 7, the blind bore 12 of the second housing 2b is formed with flat surfaces 36, 36 corresponding to the flat portions 35, 35 of the sleeve 17. Engagement of the flat surfaces 36, 36 and the flat portions 35, 35 can prevent rotation of the sleeve 17 relative to the housing 2b. This makes it possible to simplify the configuration of the sleeve 17 and reduce its weight and manufacturing steps and costs as well as to provide an electric linear actuator which can reduce damage and wear of the second housing 2b and has excellent durability, strength and reliability. Although it is described that paired flat portions of the sleeve 17 and paired flat surfaces of the housing 2b are formed on the two opposite surfaces, only one flat portion and flat surface may be formed respectively on the sleeve 17 and housing 2b.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims.

### Applicability in Industries

The electric linear actuator of the present invention can be applied to electric linear actuators used in an electric motor for general industries and driving sections of an automobile etc. having ball screw mechanism for converting the rotational input from an electric motor to the linear motion of a driving shaft.

### Explanation of Reference numerals

- 1: electric linear actuator
- 2: housing
- 2a: first housing
- 2b: second housing
- 3: input gear
- 3a: motor shaft
- 4, 29: intermediate gear
- 4a, 29a: inner diameter of intermediate gear
- 4b, 29b: teeth
- 5: output gear
- 6: speed reduction mechanism
- 7: driving shaft
- 8: ball screw mechanism
- 9: actuator main body
- 10: screw shaft
- 10a, 18a: screw groove
- 11,12: blind bore
- 13, 23: rolling bearing
- 14: key
- 15: guide pin
- 17: sleeve
- 17a: recessed groove
- 18: nut
- 18b: outer circumference of nut
- 18c: chamfered portion of nut
- 19: ball
- 20: supporting bearing
- 20a: shield plate
- 21: bridge member
- 22: gear shaft
- 24: outer ring
- 25: cage
- 26: needle roller
- 27,28: washer
- 30: sliding bearing
- 31: sleeve main body
- 32: bottom plate
- 32a: projection
- 33: annular groove
- 34: stopper ring
- 35: flat portion
- 36: flat surface
- 50: electric linear actuator
- 51: housing
- 51a: cavity
- 51b: cylinder
- 51c: outlet of fluid
- 51d: step portion
- 51e: guide groove
- 51f: side surface of guide groove
- 52: screw shaft
- 52a: male screw groove
- 52b: round shaft portion
- 52c: flange portion
- 53: bearing
- 53a: inner ring
- 53b: outer ring
- 54: stopper ring
- 55: washer
- 56: leaf spring
- 57: nut
- 57a: female screw groove
- 57b: radially projected portion
- 57c: side surface of radially projected portion
- 57d: tube
- 57e: bracket
- 57f: screw
- 58: ball
- 59: piston member
- 59a: circumferential groove
- 60: O-ring
- D: inner diameter of washer
- d: outer diameter of inner ring of support bearing
- L: moving range of screw shaft
- δ: gap between side surface of radially projected portion and side surface of guide groove.

## Claims

1. An electric linear actuator comprising:
a housing (2);
an electric motor mounted on the housing (2);
a speed reduction mechanism (6) for reducing rotational speed of the electric motor via a motor shaft (3a); and
a ball screw mechanism (8) for converting rotational motion of the electric motor transmitted via the speed reduction mechanism (6) to axial linear motion of a driving shaft (7); the ball screw mechanism (8) comprising a nut (18) formed with a helical screw groove (18a) on its inner circumference and supported by bearings (20, 20) mounted on the housing (2) rotationally but axially immovably, and a screw shaft (10) coaxially integrated with the driving shaft (7), formed with helical screw groove (10a) on its outer circumference corresponding to the helical screw groove (18a) of the nut (18), inserted into the nut (18) via a large number of balls (19), and supported on the housing (2) axially movably but not rotationally, and wherein a tapering chamfered portion (18c) is formed on the end of the nut (18), and **characterized in**:
**that** a sleeve (17) is secured on the housing (2b) for preventing rotation of the screw shaft (10) relative to the housing (2b) and formed with at least one axially extending recessed groove (17a) on the inner circumference of the sleeve (17);
**that** at least one guide pin (15) mounted on the end of the screw shaft (10) is engaged with the recessed groove (17a); and
**that** a blind bore (12) of the housing (2b) is formed with flat surfaces (36, 36) corresponding to flat portions (35, 35) of the sleeve (17), wherein the engagement of the flat surfaces (36, 36) and the flat portions (35, 35) prevent rotation of the sleeve (17) relative to the housing (2b).

2. An electric linear actuator of claim 1 wherein a distance between the nut (18) and the sleeve (17) is smaller than the radius of the guide pin (15).

3. An electric linear actuator of claim 1 wherein the housing (2b) is formed with an annular groove (33) in which stopper ring (34) is mounted for preventing falling-out of the sleeve (17) from the housing (2b), and wherein the inner diameter (Hs) of the stopper ring (34) is larger than the whole height (Hp) of the guide pin (15).

4. An electric linear actuator of claim 3 wherein the outer diameter of the chamfered portion (18c) at its end is smaller than the inner diameter of the stopper ring (34).

5. An electric linear actuator of claim 3 or 4 wherein corners of the stopper ring (34) are rounded to remove sharp edges.

## Patentansprüche

1. Elektrischer Linearantrieb, umfassend:
ein Gehäuse (2);
einen Elektromotor, der auf dem Gehäuse (2) montiert ist;
einen Drehzahlverminderungsmechanismus (6) zum Vermindern einer Drehzahl des Elektromotors über eine Motorwelle (3a); und
einen Kugelumlaufspindelmechanismus (8) zum Umwandeln der Drehbewegung des Elektromotors, die durch den Drehzahlverminderungsmechanismus (6) übertragen wird, in eine axiale Linearbewegung einer Antriebswelle (7); wobei der Kugelumlaufspindelmechanismus (8) eine Mutter (18), die mit einer spiralförmigen Schraubnut (18a) auf ihrem Innenumfang ausgebildet ist und durch Lager (20, 20) gestützt wird, die auf dem Gehäuse (2) drehbar, aber axial unbeweglich montiert sind, und eine Schraubenwelle (10) umfasst, die koaxial in die Antriebswelle (7) integriert ist und mit einer spiralförmigen Schraubnut (10a) auf ihrem Außenumfang ausgebildet ist, die der spiralförmigen Schraubnut (18a) der Mutter (18) entspricht, über eine große Anzahl von Kugeln (19) in die Mutter (18) eingeführt und axial beweglich, aber nicht drehbar auf dem Gehäuse (2) gestützt wird, und wobei ein konisch zulaufender, abgeschrägter Abschnitt (18c) am Ende der Mutter (18) ausgebildet ist, und **dadurch gekennzeichnet, dass**:
eine Hülse (17) am Gehäuse (2b) zum Verhindern der Drehung der Schraubenwelle (10) in Bezug auf das Gehäuse (2b) befestigt und mit mindestens einer sich axial erstreckenden vertieften Nut (17a) auf dem Innenumfang der Hülse (17) ausgebildet ist;
mindestens ein Führungsstift (15), der am Ende der Schraubenwelle (10) montiert ist, in die vertiefte Nut (17a) eingreift;
und
eine Blindbohrung (12) des Gehäuses (2b) mit flachen Flächen (36, 36) ausgebildet ist, die flachen Abschnitten (35, 35) der Hülse (17) entsprechen, wobei der Eingriff der flachen Flächen (36, 36) und der flachen Abschnitte (35, 35) die Drehung der Hülse (17) in Bezug auf das Gehäuse (2b) verhindert.

2. Elektrischer Linearantrieb nach Anspruch 1, wobei ein Abstand zwischen der Mutter (18) und der Hülse (17) kleiner als der Radius des Führungsstifts (15) ist.

3. Elektrischer Linearantrieb nach Anspruch 1, wobei das Gehäuse (2b) mit einer ringförmigen Nut (33) ausgebildet ist, in welcher ein Anschlagring (34) zum Verhindern des Herausfallens der Hülse (17) aus dem Gehäuse (2b) montiert ist, und wobei der Innendurchmesser (Hs) des Anschlagrings (34) größer als die Gesamthöhe (Hp) des Führungsstifts (15) ist.

4. Elektrischer Linearantrieb nach Anspruch 3, wobei der Außendurchmesser des abgeschrägten Abschnitts (18c) an seinem Ende kleiner als der Innendurchmesser des Anschlagrings (34) ist.

5. Elektrischer Linearantrieb nach Anspruch 3 oder 4, wobei Ecken des Anschlagrings (34) abgerundet sind, um scharfe Kanten zu entfernen.

## Revendications

1. Actionneur linéaire électrique comprenant :
un logement (2) ;
un moteur électrique monté sur le logement (2) ;
un mécanisme de réduction de vitesse (6) permettant de réduire la vitesse de rotation du moteur électrique par l'intermédiaire d'un arbre de moteur (3a) ; et
un mécanisme de vis à bille (8) permettant de convertir le mouvement rotatif du moteur électrique transmis par l'intermédiaire du mécanisme de réduction de vitesse (6) en un mouvement linéaire axial d'un arbre d'entraînement le mécanisme de réduction de vitesse (8) comprenant un écrou (18) muni d'une rainure de vis hélicoïdale (18a) sur sa circonférence interne et soutenu par des roulements (20, 20) montés sur le logement (2) de manière à pouvoir se déplacer en rotation mais pas axialement, et un arbre de vis (10) intégré de manière coaxiale avec l'arbre d'entraînement (7), muni d'une rainure de vis hélicoïdale (10a) sur sa circonférence externe correspondant à la rainure de vis hélicoïdale (18a) de l'écrou (18), introduit dans l'écrou (18) par l'intermédiaire d'un grand nombre de billes (19) et soutenu sur le logement (2) de manière à pouvoir se déplacer axialement mais pas en rotation, une partie chanfreinée effilée (18c) étant formée sur l'extrémité de l'écrou (18), et **caractérisé en ce que** :
un manchon (17) est fixé au logement (2b) pour empêcher la rotation de l'arbre de vis (10) par rapport au logement (2b) et est muni d'au moins une rainure encastrée s'étendant axialement (17a) sur la circonférence interne du manchon (17) ;
au moins une tige de guidage (15) montée sur l'extrémité de l'arbre de vis (10) est en prise avec la rainure encastrée (17a) ; et
un alésage borgne (12) du logement (2b) est muni de surfaces plates (36, 36) correspondant à des parties plates (35, 35) du manchon (17), la prise entre les surfaces plates (36, 36) et les parties plates (35, 35) empêchant la rotation du manchon (17) par rapport au logement (2b).

2. Actionneur linéaire électrique selon la revendication 1, dans lequel une distance entre l'écrou (18) et le manchon (17) est plus petite que le rayon de la tige de guidage (15).

3. Actionneur linéaire électrique selon la revendication 1, dans lequel le logement (2b) est muni d'une rainure annulaire (33) dans laquelle est montée une bague de butée (34) pour empêcher toute chute hors du manchon (17) à partir du logement (2b), et dans lequel le diamètre interne (Hs) de la bague de butée (34) est plus grand que la hauteur totale (Hp) de la tige de guidage (15).

4. Actionneur linéaire électrique selon la revendication 3, dans lequel le diamètre externe de la partie chanfreinée (18c) au niveau de son extrémité est plus petit que le diamètre interne de la bague de butée (34).

5. Actionneur linéaire électrique selon la revendication 3 ou 4, dans lequel des coins de la bague de butée (34) sont arrondis pour éliminer des arêtes vives.
